# EUROPEAN PATENT APPLICATION

(11) **EP 3 039 959 A1**
(43) Date of publication of application: **06.07.2016**
(21) Application number: 16150122.6
(22) Date of filing: 05.01.2016
(51) Int. Cl.: A01G 9/24

(54) **A CLIMATE SYSTEM FOR GREENHOUSES AND A METHOD FOR USING SAME**

(30) Priority: 05.01.2015 NL 2014084
(71) Applicant: Advanced Climate Systems B.V., 2011 VL Haarlem (NL)
(72) Inventor: DAMSTRA, Sijtse, 9965 PR Leens (NL); BARTELINK, Guido Herman Gerardus Maria, 2011 VL Haarlem (NL)
(74) Representative: Plaggenborg, Menko Bernard

(57) **Abstract**

The invention relates to a climate system for a greenhouse, wherein said greenhouse comprises a growing space for growing plants that is substantially sealed from an outside environment, wherein in said growing space at a position above the plants a cover has been provided for separating said growing space in a growing part below said cover and a screen part above said cover. The system is characterized in that the climate system is embodied for providing a first climate in the growing part and a second climate in the screen part, wherein said first climate and said second climate may be identical.

The invention further relates to a method for controlling a climate in a growing greenhouse using a climate system according to the invention.

## Description

The present invention relates to a climate system according to the preamble of claim 1.

Such a climate system is known in the art. For example, it is known to condition the air to be supplied into the growing space based on temperature, humidity, CO2 concentration, for example for the cultivation of crops such as vegetable, flowers and fruit. It is also known to control the amount of light on the one hand by using lamps and on the other hand by controlling the amount of sunlight entering the greenhouse by positioning screens or covers above the crops when the plant need less light. The temperature in the growing space is controlled by controlling the temperature of the air that is supplied, but also by positioning covers above the plants at night or when temperature is low in order to prevent cooling due to radiation to the outside environment.

Such known climate system is capable of maintaining the temperature in the growing space relatively stable. However, varying values of temperature, humidity, CO2 concentration and the like are obtained in the growing space. Such variations, micro climates, cannot be prevented in present greenhouses and are obtained due to the build of the greenhouse, the position of parts of the greenhouse with respect to the sun, the wind direction outside the greenhouse and shade, although one tries to reduce the degree of micro-climates with the use of fans. Furthermore, especially when the cover is used at night for covering the crops in the growing space, the temperature between the cover and the light transmissive ceiling of the greenhouse (the so-called screen part of the growing space) will be considerably lower than the temperature under the cover, to wit in the space containing the crops (the so-called growing part). There will be different micro climates in the growing space. Opening the cover causes the cold micro climate above the cover to mingle with the micro climate in the growing space, resulting in a considerable cooling and dew forming in said growing space and, consequently, in damage to the crops. In practice, the covers can be safely opened after the sun has warmed the screen part so as to reach a temperature in the greenhouse. Such results in larger energy consumption for the lamps for compensating lack of natural sun light.

In the art there is a need for a system and method yielding an accurate control of the climate in a greenhouse and wherein the complete space has a uniform climate profile. More in particular, a system and method are preferred allowing one to accurately control the temperature, the humidity, the CO2 concentration and the amount of light.

The invention further aims ate providing a climate system and a method allowing one to perform novel optimization techniques and calculations for maintaining a higher maximum temperature, CO2 concentration and humidity values in the greenhouse, so as to stimulate growth, improve production and reduce energy consumption.

By using measured values of these variables and the maximum allowed values the crops can bear for providing an optimum growth, development and yield, optionally in combination with a weather forecast and a corresponding comparison, the grower's knowledge will be available automated and computerized. A digitally controlled greenhouse will be obtained with the present invention.

The invention now aims at providing an improved climate system of the kind mentioned in the preamble with which at least one of the temperature, the humidity, the CO2 concentration and the amount of light can be controlled accurately.

The invention especially aims at providing a climate system of the kind mentioned in the preamble with which no undesired air flows in the growing space are obtained.

The invention also aims at providing an improved climate system that can provide an optimum climate in the growing space based on data obtained from the outside environment of the greenhouse.

The invention further aims at providing a climate system that can provide a uniform climate both above the cover and under same, in a horizontal space, with only a air supply member at a position in the growing part of the growing space.

So as to obtain at least one of the above mentioned goals, according to a first embodiment the invention provides a climate system comprising the features of claim 1. This climate system has the advantage that large local climate differences (climate islands) and local air flows are prevented and that the cover can be removed at all times so as to have the crops absorb outside light. Since the climate at a position above the cover, that is between the cover and a light transmissive shielding of the greenhouse, also indicated as roof or ceiling, and a position below said cover, that is the space where the crops are grown, is identical, the cover can be removed at all times for sunlight to reach the crops, even after a cold night when the cover was closed all the times for providing the crops some rest. The climate system according to the invention therefore has the additional advantage that the climate can be controlled more uniformly and the differences in growth can be minimalized. Also, higher maximum values of humidity, temperature and CO2 can be realized and maintained.

Therefore, it is clear that the present climate system has an improved effect on the conditions in the growing space and the production rate that can be obtained.

It is thus clear that a cover according to the present invention as an effect only protects the crops against too much light from the surroundings and not against loss of warmth due to a low outside temperature. The climate system is embodied for providing a uniform climate in the complete growing space independent the position in the growing space.

A period without light is usually identified as a resting period for the crops, during which usually a specific concentration of CO2, temperature and humidity are maintained. The climate system according to the invention is easily capable of accurately maintaining the target values for a long time. A large advantage is that the windows of the greenhouse may remain closed since high temperatures may be controlled accurately. In case of a possible too high temperature due to much sunlight, the covers can be closed (partly or completely) adding to a lower temperature in the growing part and the other parts of the greenhouse. Due to this accurate control a temporary exceedance of the usual maximum temperature will be allowed since the temperature can be set to a lower value easily and quickly. Therefore, loss of energy with the present climate system is very low.

The cover may suitably provide a partially or substantially complete light-tight shielding of said both parts. Partially lightproof covers may provide a diffuse scattering of sunlight. Such provides an optimal efficacy of the climate system, since the climate system only has to take care of a desired control of temperature, humidity and CO2 concentration. The terms "substantially complete light tight" and "partially light tight" relate to covers that are both completely light tight and that do not transmit any light into the growing part of the growing space as well as covers that only scatter light from the outside diffusely, for example sunlight.

It is especially preferred that the climate system is an air pressure controlled climate system. Such yields an optimally accurate control. It has shown that a climate system that works on a basis of air pressure differences may provide a substantially single climate; there are no micro-climates in the greenhouse. This means that, anywhere in the greenhouse, the same climate is obtained, such that al crops receive the same conditions. Also, no cold air flows are obtained by such system. The yield therefore will be identical throughout the complete greenhouse when using an air pressure difference based system.

In the state of the art, it was tried to solve the microclimate problems by means of fans for obtaining huge air flows and, as a consequence, a uniform climate. However, such requires much energy and also a lower yield. The method and the climate system according to the present invention provide a quiet uniform climate without air flows.

Another advantage of the climate system that is based on air pressure, *in casu* a measured difference between the air pressure inside the greenhouse and the air pressure outside the greenhouse is that it can respond more quickly to climate changes than in the currently available methods for climate control in a greenhouse. The heating that is required according to the state of the art is obtained by means of heating tubes; such heating system may be redundant when applying the climate system according to the present invention when applying an air pressure based system.

It is especially preferred that the air pressure in the growing space is higher than in the outside environment. Such improves the quality and accurateness of the control and prevents the penetration of germs or undesirable organisms from the outside environment in the greenhouse. The climate system, also identified as air conditioning system with intelligent control, according to the present invention provides the effect that sufficient air is entered into the greenhouse so as to obtain a higher pressure inside than outside and to maintain same with respect to the outside environment.

The pressure difference does not have to be high. SO as to be able to easily measure the pressure difference, the climate system according to the invention preferably comprises an air supply member for supplying air into the growing space and an air discharge member for removing air from the growing space, wherein a pressure difference between the growing space and outside the growing space is smaller than 15 Pa, preferably smaller than 10 Pa, more preferably smaller than 5 Pa, and still more preferably smaller than 3 Pa. Such showed to be a very efficient control.

A simple but nonetheless accurate and efficient control may be obtained by a climate system wherein the air supply members is an air supply channel and said air discharge member is chosen from a window or a valve to the outside environment, or an air discharge duct.

It is especially preferred that the air discharge member comprises the screen part. Then, the air may be supplied to the growing part and from a position above the cover, for example through the screen part of the growing space when the cover is placed in a covering position, be discharged.

So as to be able to provide an accurate control in a greenhouse, the climate system is preferably provided with one or a plurality of temperature sensors, pressure sensors, humidity sensors, CO2 sensors and light sensors.

According to a further aspect, the invention also relates to a method for controlling a climate in a growing greenhouse using a climate system according to any of the preceding claims, wherein said greenhouse comprises a growing space defined by a bottom and an at least partially light transmissive cover, said growing space comprising a cover that is displaceable between a relatively light-tight position and a relatively light transmissive position for closing of the growing part between the bottom and the cover substantially light-tight when the cover is in the relatively light-tight, wherein between the cover and the light transmissive cover a screen part is positioned; wherein the method comprises the step of providing a first climate in the growing part and a second climate in the screen part by means of the climate system when the cover is positioned in the relatively light-tight position, said first climate and second climate optionally being identical. Such method provides the advantages as mentioned above with respect to the climate system according to the invention.

It is preferred that the method according to the invention comprises the step of applying by means of the climate system a pressure difference between the growing space in the greenhouse and the outside environment outside the greenhouse of less than 15 Pa, preferably less than 10 Pa, more preferably less than 5 Pa, still more preferably less than 3 Pa. As a result, an effective protection is obtained against entrance into the growing space of germs and harmful organisms.

According to a further preferred embodiment the method according to the invention comprises the step of providing a pressure difference through the climate system between the growing part in the greenhouse and the screen part in the greenhouse. The pressure in the growing part is higher than in the screen part, wherein the pressure difference is preferably less than 15 Pa, preferably less than 10 Pa, more preferably less than 5 Pa, still more preferably less than 3 Pa. Thus, the uniformity of the air in the growing space is optimal in the complete growing space. It has shown that the temperature, humidity and CO2 concentration are identical anywhere in the growing space. Supply of fresh, conditioned air does not lead to differences in these factors, even close to walls and the ceiling of the growing space that are in direct contact with the outside environment.

An accurate and efficient control may especially be obtained by means of a method according to the invention, wherein the climate system is provided with one or a plurality of temperature sensors, pressure sensors, humidity sensors, CO2 sensors and light sensors, and wherein the climate system is provided with - a fan for controlling a supply of air into the growing space, and furthermore at least one of: - a heating or cooling system for controlling the temperature of air to be supplied; - a humidifying or dehumidifying system for controlling the air humidity; wherein the climate system furthermore comprises a computing unit for comparing measurement data obtained from one or more sensors with measurement data that are stored in a database, for controlling at least one of the fan, the humidifying or dehumidifying system by means of said comparison. Since the actual measured data must be compared with historical or desired positions of the cover or CO2 concentrations and temperature, a correct climate in the growing space may be obtained anytime. In the database, a distinction can be made in the breeding period of the crops, for example, development, flower formation, et cetera.

The climate system may furthermore be provided with a valve in an air supply member for supplying air to the growing space or in an air discharge member for discharging air from the growing space. In that case, a computer may then be embodied for controlling that at least one valve.

It is especially preferred that the climate system comprises a weather station for controlling, based on a weather forecast, at least one of the temperature, the humidity, the CO2 concentration of air to be supplied and the pressure difference between the growing space and the outside environment.

The control system of the climate system according to the present invention therefore provides an integral control of all actors that have influence on the climate in the greenhouse, each independently and in combination and based on historical data and prediction.

By means of data from a weather station in combination with a database containing historical data, a climate system is obtained that can control by anticipating on upcoming weather forecasts and on the basis of knowledge extracted from analysis of all collected and stored data that originate from actors, sensors and system measurements.

In the present invention, the screens are used for optimizing the use of solar energy and light entrance. During the night, the screens are used for optimum darkening (a resting period for the crops) and during day-time the cover can be used for tempering peak values of sun light. Such is substantially different from screen use up to date. Up till now, the screens (or covers) were used for isolation purposes so as to retain the day's heat as long as possible inside the greenhouse. As a consequence, different climates are obtained at a position above the cover and at a position below the cover (like different temperatures). Cover control is dependent on the heating of the air above the cover so as to prevent a temperature drop on the crops when removing the cover from above the crops. Applying a method of control according to the present invention will prevent the occurrence of such temperature drop since the climate in the greenhouse is identical throughout the complete greenhouse, both in the growing part and in the screen part. In the present invention, control of the cover is based on optimizing use of solar energy. A substantially higher yield of incoming energy, in terms of increased production of crops and a reduced energy requirement, is obtained with the climate system and method according to the present invention.

According to the present invention, the windows of the greenhouse will be kept closed as much as possible. Only when by optimization of all actors and factors together, the maximum allowable temperature is exceeded, the windows are opened. This allows the extent to which the windows are opened to be greatly reduced with respect to the systems used up to now. During winter and other cold periods, like early spring and late fall, the greenhouse wil be kept closed completely. As a consequence, optimum conditions in terms of relative and absolute humidity, temperature and CO2 concentration, can be realized. This provides better energy performance, less CO2 consumption and better growth of crops.

The invention adds to the control of lighting wherein by opening the screens earlier in the morning, artificial light may be switched off earlier or wherein said artificial light may be reduced.

The CO2 concentration is a determining factor for the growth of the plant. With the present invention, the CO2 concentration may be kept at a higher concentration, i.e. a higher dosage may be delivered, since the greenhouse is kept close as much as possible. According to the present invention, CO2 concentration is kept at a maximum value crops can withstand. Such concentration differs along the various stages of the cultivation. On average, the value of the CO2 concentration is higher than in methods according to the state of the art whereas less CO2 has to be added, since the windows are kept close maximally. The maximum concentration of CO2, as well as the maximum values of temperature and humidity and the position of the cover, may be determined by the grower but may also be calculated in the basis of data retrieved from a database.

The humidity in the greenhouse is both a determining factor for growth of the crops and for the extent to which diseases can occur in the greenhouse. The present invention provides the possibility that a higher relative humidity (Rv) is maintained in the growing space by an active control of the Rv during temperature changes. As a consequence, the occurrence of dew, a natural source of fungi, on the plants is reduced.

The actual values to be applied may be determined by the grower but may also be determined on the basis of a weather forecast for the next 12 hour, 24 hour or for example 48 hour, optionally supplemented by historical data collected in the above-mentioned database. This can provide major energy savings.

As mentioned above, the climate system also controls the temperature in the growing space, wherein usually a desired temperature and a maximum temperature are taken into account.

The maximum temperature is determined by crop characteristics. As such, the maximum temperature is determined as the temperature wherein the crops are not detrimentally influenced in respect of (future) growth and production. The desired temperature is determined on the basis of cultivation (crop characteristics), the stage of cultivation and recent temperature history.

The climate system according to the present invention determines the desired temperature by means of temperature integration, by integrating the maximum amount of heat in a certain time frame, for example for the past 12 hour, 24 hour or the past 48 hour, from which a maximally allowable actual temperature can be calculated. As a consequence, the climate system according to the present invention provides a high tolerance for temperature and as such, the windows can remain closed even in cases of high solar radiation. Only when the temperature threatens to rise above the actual maximum temperature and there is no possibility for cooling in the air conditioning system, windows will have to be opened.

In the method and the climate system according to the invention the maximum temperature may rise to the actual maximum temperature a plant may withstand, usually 38 °C, without actually obtaining any damage. According to the state of the art wherein relatively limited and slow climate changes can be obtained, a maximum temperature of 32 °C is maintained in the greenhouse. It is of importance that the total amount of heat to which a plant is exposed during extended periods of time (as mentioned above) is not higher than the indicated total value. Similarly this also applies to the minimum temperature. In other words, the average temperature for a certain time frame is important, wherein such average temperature can be easily controlled in the complete greenhouse by means of the present invention. In the absence of micro-climates in the process and the climate system of the present invention, an accurate and efficient operation in the greenhouse may be achieved.

By applying temperature integration and in case of a relatively high solar radiation during day-time, in an analogous manner a lower temperature during the night may be set and realized. Such kind of control yields a higher growth and less energy consumption. This additional arrangement ensures optimum illumination of the plant with reduced use of lighting installations. Such control therefore saves energy.

The invention is not limited to the embodiments identified above. The invention is limited by the appending claims only.

The invention also relates to every combination of measures that have been described here independently from each other.

## Claims

1. A climate system for a greenhouse, wherein said greenhouse comprises a growing space for growing plants that is substantially sealed from an outside environment, wherein in said growing space at a position above the plants a cover has been provided for separating said growing space in a growing part below said cover and a screen part above said cover, **characterized in that** the climate system is embodied for providing a first climate in the growing part and a second climate in the screen part, wherein said first climate and said second climate may be identical.

2. A climate system for a greenhouse according to claim 1, wherein the cover provides an at least partially light-tight shielding of said both parts.

3. A climate system for a greenhouse according to claim 1 or 2, wherein the climate system is an air pressure controlled climate system.

4. A climate system for a greenhouse according to claim 1, 2 or 3, wherein the air pressure in the growing space is higher than in the outside environment.

5. A climate system for a greenhouse according to any of the preceding claims, comprising an air supply member for supplying air into the growing space and an air discharge member for removing air from the growing space, wherein a pressure difference between the growing space and outside the growing space is smaller than 15 Pa, preferably smaller than 10 Pa, more preferably smaller than 5 Pa, and still more preferably smaller than 3 Pa.

6. A climate system for a greenhouse according to claim 5, wherein said air discharge member is chosen from a window or a valve to the outside environment, or an air discharge duct.

7. A climate system for a greenhouse according to claim 5 or 6, wherein said air discharge member comprises a window.

8. A climate system for a greenhouse according to any of the preceding claims, wherein the climate system is provided with one or a plurality of temperature sensors, pressure sensors, humidity sensors, CO2 sensors and light sensors.

9. A method for controlling a climate in a growing greenhouse using a climate system according to any of the preceding claims, wherein said greenhouse comprises a growing space defined by a bottom and an at least partially light transmissive cover, said growing space comprising a cover that is displaceable between a relatively light-tight position and a relatively light transmissive position for closing of the growing part between the bottom and the cover substantially light-tight when the cover is in the relatively light-tight, wherein between the cover and the light transmissive cover a screen part is positioned; wherein the method comprises the step of providing a first climate in the growing part and a second climate in the screen part by means of the climate system when the cover is positioned in the relatively light-tight position, said first climate and second climate optionally being identical.

10. A method according to claim 9, comprising the step of applying by means of the climate system a pressure difference between the growing space in the greenhouse and the outside environment outside the greenhouse of less than 15 Pa, preferably less than 10 Pa, more preferably less than 5 Pa, still more preferably less than 3 Pa.

11. A method according to claim 9, comprising the step of applying the by means of the climate system a pressure difference between the growing part in de greenhouse and the outside environment outside the greenhouse of less than 15 Pa, preferably less than 10 Pa, more preferably less than 5 Pa, still more preferably less than 3 Pa.

12. A method according to any of the preceding claims, wherein the climate system is provided with one or a plurality of temperature sensors, pressure sensors, humidity sensors, CO2 sensors and light sensors, and
wherein the climate system is provided with - a fan for controlling a supply of air into the growing space, and furthermore at least one of: - a heating or cooling system for controlling the temperature of air to be supplied; - a humidifying or dehumidifying system for controlling the air humidity;
wherein the climate system furthermore comprises a computing unit for comparing measurement data obtained from one or more sensors with measurement data that are stored in a database, for controlling at least one of the fan, the humidifying or dehumidifying system by means of said comparison.

13. A method according to any of claims 9-12, wherein the climate system comprises a weather station for controlling, based on a weather forecast, at least one of the temperature, the humidity, the CO2 concentration of air to be supplied and the pressure difference between the growing space and the outside environment.
